# EUROPÄISCHE PATENTANMELDUNG

(11) **EP 1 536 248 A2**
(43) Veröffentlichungstag der Anmeldung: **01.06.2005**
(21) Anmeldenummer: 04027512.5
(22) Anmeldetag: 19.11.2004
(51) Int. Cl.: G01S 17/02, G01S 17/42, G01S 17/46, G01S 17/58, G01S 17/66, G01S 5/16

(54) **Verfahren und System zur Positionsverfolgung von beweglichen Objekten**

(30) Priorität: 27.11.2003 DE 10356418
(71) Anmelder: Deutsches Zentrum für Luft- und Raumfahrt e.V, 53127 Bonn (DE)
(72) Erfinder: Riede, Wolfgang, 75417 Mühlacker (DE)
(74) Vertreter: HOEGER, STELLRECHT & PARTNER Patentanwälte

(57) **Zusammenfassung**

Es wird ein Verfahren zur Positionsverfolgung von beweglichen Objekten vorgeschlagen, bei dem ein zu verfolgendes Objekt Lichtsignale sendet und von dem Objekt kommende Lichtsignale ortsaufgelöst detektiert werden.

## Beschreibung

Die Erfindung betrifft ein Verfahren zur Positionsverfolgung von beweglichen Objekten.

Die Erfindung betrifft ferner ein Positionsverfolgungssystem für bewegliche Objekte.

Beispielsweise in der Bühnentechnik gibt es das Problem, daß die Bewegung eines Schauspielers verfolgt werden muß, damit ein Scheinwerfer auf diesen gerichtet werden kann.

Es sind Systeme zur Positionsverfolgung von beweglichen Objekten bekannt, welche Funksignale zur Übermittlung der Position verwenden. Funksignale sind in vielen Bereichen ungeeignet, wie beispielsweise in der Bühnentechnik oder in Umgebungen mit empfindlichen elektronischen Bauteilkomponenten.

Der Erfindung liegt die Aufgabe zugrunde, ein Verfahren zur Positionsverfolgung von beweglichen Objekten und ein Positionsverfolgungssystem für bewegliche Objekte bereitzustellen, mittels welchem sich kontinuierlich und automatisch die Position von beweglichen Objekten bestimmen läßt.

Diese Aufgabe wird bei dem eingangs genannten Verfahren erfindungsgemäß dadurch gelöst, daß ein zu verfolgendes Objekt Lichtsignale sendet und von dem Objekt kommende Lichtsignale ortsaufgelöst detektiert werden.

Durch die Lichtsignale, welche das Objekt sendet, ist eine Interferenz mit anderen Systemen vermieden, da sich die Lichtsignale in eine bestimmte Richtung in einem begrenzten Raumwinkel senden lassen.

Es läßt sich auf einfache Weise erreichen, daß die Lichtsignale automatisch und kontinuierlich gesendet werden, so daß eine kontinuierliche und automatische Positionsverfolgung möglich ist.

Durch die ortsaufgelöste Detektion läßt sich über einen Positionsdetektor insbesondere dann, wenn sich das Objekt auf einer zweidimensionalen Bahn bewegt, dem Objekt eine Winkelposition zuordnen. Es lassen sich dann auch Bewegungen mit großen Winkelgeschwindigkeiten wie beispielsweise größer 10 rad/s auf genaue Weise bestimmen.

Es läßt sich gleichzeitig die Position von mehreren Objekten bestimmen, da bezüglich der Lichtsignale auf einfache Weise eine Interferenz ausgeschlossen werden kann.

Das Datenaufkommen ist bei dem erfindungsgemäßen Verfahren gering gehalten, so daß eine schnelle und unkomplizierte Auswertung möglich ist. Im Gegensatz beispielsweise zu einem Kamera-basierten System muß keine Mustererkennung bzw. Bildverarbeitung durchgeführt werden.

Es kann vorgesehen sein, daß das Objekt selbstleuchtend ist, indem es insbesondere mit einer oder mehreren Lichtquellen versehen wird. Bei den Lichtquellen kann es sich insbesondere um Leuchtdioden handeln.

Es ist auch möglich, daß das Objekt passiv leuchtet und insbesondere beleuchtet wird.

Es ist dann insbesondere vorgesehen, daß durch das Objekt Licht einer Lichtquelle, durch welche das Objekt beleuchtet wird, reflektiert wird. Die Modifikationen, die an dem Objekt vorgenommen werden müssen, damit dieses Lichtsignale sendet, lassen sich dadurch gering halten, da im wesentlichen nur ein Reflektor vorgesehen werden muß.

Es kann dann vorgesehen sein, daß das Objekt integral beleuchtet wird und insbesondere mit einem Lichtkegel beaufschlagt wird.

Insbesondere wird das Objekt mit moduliertem Licht beleuchtet. Bei der Auswertung entsprechender Detektorsignale kann dann ein Hintergrund eliminiert werden, wodurch sich eine hohe Empfindlichkeit und Genauigkeit ergibt.

Es ist auch möglich, daß das Objekt bei der Beleuchtung periodisch abgetastet wird. Dadurch ergibt sich eine Modulation der Lichtsignale des Objekts (welche Reflexionssignale sind). Die entsprechende Modulation der Reflexions-Lichtsignale kann dann wiederum dazu genutzt werden, um einen Hintergrund zu eliminieren.

Ganz besonders vorteilhaft ist es, wenn die vom Objekt gesandten Lichtsignale moduliert sind, wobei die Lichtsignale Reflexions-Lichtsignale oder direkte Lichtsignale sein können. Durch die Modulation und insbesondere frequenzstabile Modulation kann über Lock-In-Techniken eine Korrelation eines Detektorsignals mit einem entsprechenden periodischen Signal durchgeführt werden, wobei Rauschen (der Hintergrund) durch eine zeitliche Mittelwertsbildung eliminierbar ist. Dadurch erhöht sich die Genauigkeit der Positionsbestimmung.

Insbesondere ist es dann vorgesehen, daß Detektionssignale über die Lock-In-Verfahren ausgewertet werden, um eine hohe Positionsgenauigkeit mit hoher Empfindlichkeit zu erreichen.

Ganz besonders vorteilhaft ist es, wenn die Detektion der Lichtsignale von dem Objekt zweidimensional ortsaufgelöst erfolgt. Insbesondere ist ein Positionsdetektor vorgesehen, welcher die Positionsdetektion in zwei Dimensionen erlaubt. Dadurch läßt sich eine zweidimensionale Bewegung des Objekts (wie beispielsweise eines Roboters in einer Maschinenhalle oder eines Schauspielers auf einer Bühne) direkt in ein Positionssignal des Detektors umwandeln.

Günstigerweise wird die Winkelposition des Objekts bezüglich eines Ruhesystems ermittelt, wobei die Winkelposition gegenüber einer Referenzposition ermittelt wird.

Es ist dann möglich, die Winkelposition gegenüber der Referenzposition als Stellgröße für eine Nachführung zu verwenden. Bei der Nachführung kann es sich um eine Nachführung von Licht, welches dem Detektor zugeführt wird und/oder von Beleuchtungslicht für das Objekt handeln.

Wenn sich das Objekt auf einer zweidimensionalen Bahn bewegt, das heißt auf einer zweidimensionalen Fläche bewegt, dann läßt sich mit dem erfindungsgemäßen Verfahren auf einfache, automatische und kontinuierliche Weise die Winkelposition dieses beweglichen Objekts bestimmen.

Insbesondere wird die Position eines Objekts auf einer zweidimensionalen Fläche verfolgt. Das entsprechende Positionsverfolgungssystem läßt sich auf einfache Weise ausbilden, wobei auch Bewegungen mit großer Winkelgeschwindigkeit verfolgbar sind.

Ganz besonders vorteilhaft ist es, wenn die Lichtbeaufschlagung eines Detektors entsprechend der bestimmten Position des Objekts nachgeführt wird. Durch ein solches opto-mechanisches Verfolgungsverfahren wird automatisch dafür gesorgt, daß Licht stets den Detektor erreicht. Es wird dabei die ermittelte Position des Objekts verwendet, um für eine Nachführung zu sorgen.

Insbesondere ist es vorgesehen, daß ein oder mehrere Richtelemente, mittels welchem oder welchen Licht vom Objekt auf einen Detektor gerichtet wird, entsprechend der Position des Objekts nachgeführt wird. Dadurch wird sichergestellt, daß Licht von dem Objekt, welches entweder direkt ausgesandt wird oder welches Reflexionslicht ist, den Detektor erreicht.

Beispielsweise erfolgt die Nachführung über einen Zweiachsenscanner, wobei die Bewegung der entsprechenden Elemente des Zweiachsenscanners entsprechend gesteuert und/oder geregelt wird. Ein Zweiachsenscanner weist eine Beweglichkeit um zwei Achsen auf, so daß bei entsprechender Anordnung eine Bewegung des Objekts in zwei Dimensionen innerhalb des Bewegungsbereichs des Zweiachsenscanners erfaßt werden kann.

Ganz besonders vorteilhaft ist es, wenn eine optische Achse für Lichtsignale vom Objekt und für Licht, mit welchem das Objekt beleuchtet wird, im wesentlichen kollinear eingestellt werden. Dadurch läßt sich auf einfache Weise eine kontinuierliche automatische Beleuchtung des Objekts erreichen und dabei auch automatisch eine Beaufschlagung des Detektors mit vom Objekt stammenden Lichtsignalen sicherstellen.

Insbesondere wird die Beleuchtung des Objekts entsprechend der bestimmten Position des Objekts nachgeführt. Dadurch wird für eine automatische kontinuierliche Beleuchtung des Objekts gesorgt, so daß das Objekt wiederum (Reflexions-)Lichtsignale aussenden kann, die detektierbar sind.

Insbesondere werden eine Nachführung der Beleuchtung und eine Nachführung eines oder mehrerer Richtelemente für den Detektor korreliert. Dadurch wird gleichzeitig für eine Ausleuchtung des Objekts und der vom Objekt stammenden Lichtsignale gesorgt.

Beispielsweise erfolgt die Nachführung der Beleuchtung über einen Zweiachsenscanner.

Um die Position des Objekts nicht nur auf einer zweidimensionalen Fläche, sondern im Raum bestimmen zu können, ist es vorteilhaft, wenn eine Entfernungsmessung zwischen einem Ruhesystem und dem Objekt durchgeführt wird. Dadurch erhält man eine weitere Koordinate für die Objektposition, so daß die Position des Objekts im Raum bestimmbar ist.

Insbesondere wird die Entfernung über eine Laufzeitmessung bestimmt. Es werden dazu Signale von einem entsprechenden Sender zu dem Objekt gesandt und die Zeit gemessen, die vergeht, bis Reflexionssignale an einem mit dem Sender korrelierten Empfänger eingehen. Über die Messung der Laufzeit läßt sich bei bekannter Signalgeschwindigkeit der Abstand zwischen dem Sender-Empfänger-System und dem Objekt ermitteln.

Ganz besonders vorteilhaft ist es, wenn die Lichtsignale in einem für das menschliche Auge unsichtbaren Spektralbereich liegen. Sie stören dadurch einen Beobachter nicht. Beispielsweise bei dem Einsatz in der Bühnentechnik werden weder Schauspieler noch Zuschauer durch die Lichtsignale des Positionsverfolgungsverfahrens gestört.

Ganz besonders vorteilhaft ist es, wenn die Lichtsignale in einem Wellenlängenbereich zwischen 1500 nm und 1800 nm liegen. Dieser Spektralbereich ist unsichtbar für das menschliche Auge. In diesem Spektralbereich ist auch eine relative hohe Laserleistung zum Erreichen der Laserklasse 1 erlaubt.

Insbesondere ist es vorgesehen, daß das Objekt mit Laserlicht beleuchtet ist oder beleuchtet wird, um eine relativ hohe Signalstärke zu erhalten. Darüber hinaus wird auch eine gute Richtwirkung erzielt.

Es ist günstig, wenn das Objekt mit einem Trägheitssensorsystem versehen wird, wobei dieses Trägheitssensorsystem insbesondere Beschleunigungssensoren umfaßt. Dadurch läßt sich die Position des Objekts zusätzlich oder alternativ zu dem optischen Bestimmungsverfahren ermitteln. Dies kann beispielsweise vorteilhaft sein, wenn der Lichtweg unterbrochen wird. Dadurch gehen die Positionsdaten nicht verloren und das Objekt geht für ein entsprechendes Positionsverfolgungssystem nicht verloren.

Es ist dann auch günstig, wenn zur Positionsbestimmung Detektionssignale der optischen Detektion und Signale des Trägheitssensorsystems verknüpft werden. Es läßt sich dann die Position eines zu verfolgenden Objekts zu jedem Zeitpunkt bestimmen, auch wenn der Lichtweg unterbrochen ist. Während Zeiten, in denen der Lichtweg unterbrochen ist, lassen sich die Positionsdaten des Trägheitssensorsystems verwenden.

Ganz besonders vorteilhaft ist es, wenn optisch ermittelte Positionsdaten als Referenzdaten für das Trägheitssensorsystem dienen. Trägheitssensorsysteme mit Beschleunigungssensoren haben das grundsätzliche Problem, daß sich Störungen bzw. Ungenauigkeiten über längere Zeiträume aufsummieren, so daß die Positionsdaten desto ungenauer werden, desto länger gemessen wird. Da die optische Messung eine Absolutmessung ist, ist die Genauigkeit grundsätzlich unabhängig davon, welcher Zeitraum während der Messung vergangen ist. Die von dem Trägheitssensorsystem gelieferten Positionsdaten lassen sich also, wenn entsprechende optische Daten vorhanden sind, in Vergleich setzen und "kalibrieren". Dadurch wiederum erhält man Positionsdaten guter Genauigkeit, auch wenn der Lichtweg unterbrochen ist, da der Ausgangswert des Trägheitssensorsystems mit Positionsdaten hoher Genauigkeit verknüpft ist.

Es kann vorgesehen sein, daß über die ermittelten Positionsdaten eine Vorrichtung gesteuert und/oder geregelt wird, welche mit dem Objekt in einer Wirkbeziehung steht. Beispielsweise kann über die ermittelten Positionsdaten des Objekts "Schauspieler" in der Bühnentechnik ein Scheinwerfer gesteuert werden, welcher auf den Schauspieler gerichtet ist. Beispielsweise ist es auch möglich, Lautsprecher mit Hilfe der ermittelten Positionsdaten auszurichten, um so eine akustische Nachführung zu realisieren. Dadurch läßt sich die Scheinwerferbewegung oder Lautsprecherausrichtung automatisch verknüpft an die Bewegung des Schauspielers selber steuern. Wenn beispielsweise die Bewegung eines Roboters in einer Maschinenhalle verfolgt werden soll, dann kann die Vorrichtung, welche in Wirkbeziehung mit dem Roboter steht, eine Sicherungsvorrichtung sein, welche für einen Bewegungsstop des Roboters sorgt, wenn dieser in einen verbotenen Bereich eindringt.

Das erfindungsgemäße Verfahren läßt sich vorteilhafterweise dazu einsetzen, gleichzeitig die Position einer Mehrzahl von Objekten zu verfolgen. Durch die optische Detektion können die Objekte unabhängig voneinander verfolgt werden.

Es ist dazu vorgesehen, daß unterschiedliche Objekte unterschiedlich codiert werden, um so die einzelnen Objekte unabhängig voneinander verfolgen zu können.

Beispielsweise ist es vorgesehen, daß unterschiedliche Objekte unterschiedliche spektrale Charakteristika haben. Bei selbstleuchtenden Objekten senden unterschiedliche Objekte beispielsweise Licht in einem unterschiedlichen Spektralbereich aus. Bei reflektierenden Objekten können die Reflektoren unterschiedliche Objekte unterschiedlich ausgestaltet sein. Werden dann die Objekte mit Licht in einem entsprechenden Spektralbereich breitbandig beaufschlagt, dann liegt das Lichtsignal der entsprechenden Objekte in einem engen Spektralbereich, wobei sich die Spektralbereiche unterschiedlicher Objekte unterscheiden.

Es ist auch möglich, daß unterschiedlichen Objekten unterschiedliche Modulationsfrequenzen zugeordnet sind, um auf diese Weise eine Codierung unterschiedlicher Objekte zu erreichen.

Die eingangs genannte Aufgabe wird bei einem Positionsverfolgungssystem für bewegliche Objekte erfindungsgemäß dadurch gelöst, daß eine Detektionseinrichtung vorgesehen ist, welche in einem Ruhesystem angeordnet ist, daß eine Lichtquelleneinrichtung vorgesehen ist, welche derart mit einem oder mehreren zu verfolgenden Objekten verbunden ist, daß das oder die Objekte Lichtsignale senden, wobei die Lichtsignale durch die Detektionseinrichtung ortsaufgelöst detektierbar sind, und daß eine Positionsbestimmungseinrichtung vorgesehen ist, über welche die Position des oder der Objekte mit Hilfe der Detektionssignale bestimmbar ist.

Dieses Positionsverfolgungssystem weist die bereits im Zusammenhang mit dem erfindungsgemäßen Verfahren erläuterten Vorteile auf.

Weitere vorteilhafte Ausgestaltungen wurden ebenfalls bereits im Zusammenhang mit dem erfindungsgemäßen Verfahren erläutert.

Die Lichtquelleneinrichtung, welche direkt an einem Objekt angeordnet sein kann oder welche ein Objekt mit Licht beaufschlagt, sorgt für die Lichtsignale, welche von dem Objekt gesandt werden. Die Detektionseinrichtung, welche einen Positionsdetektor umfaßt, ermöglicht es, die Position des Objekts zu bestimmen.

Insbesondere sind die Lichtsignale des oder der Objekte moduliert, um so Lock-In-Techniken einsetzen zu können. Damit läßt sich bei der Auswertung eine Hintergrundbeleuchtung ausschließen.

Ganz besonders vorteilhaft ist es, wenn eine Nachführungseinrichtung für die Richtung von Lichtsignalen, welche von dem oder den Objekten gesandt werden, zu der Detektionseinrichtung vorgesehen ist, wobei die Nachführungseinrichtung über die bestimmte Position des oder der Objekte steuerbar und/oder regelbar ist. Dadurch ist eine kontinuierliche automatische Beaufschlagung der Detektoreinrichtung mit von dem Objekt stammenden Lichtsignalen möglich. Dadurch wiederum läßt sich, sofern der Lichtweg nicht unterbrochen ist, zu jedem Zeitpunkt die Position des Objekts opto-mechanisch bestimmen.

Insbesondere ist über die Positionsbestimmungseinrichtung die Nachführungseinrichtung steuerbar und/oder regelbar. In der Positionsbestimmungseinrichtung werden die Positionsdaten des Objekts ermittelt. Diese Positionsdaten werden wiederum dazu verwendet, die Nachführungseinrichtung zu steuern bzw. zu regeln, um so sicherzustellen, daß die Lichtsignale des Objekts zu Detektoreinrichtung gelangen.

Es ist dann auch vorteilhaft, wenn über die Positionsbestimmungseinrichtung eine Vorrichtung steuerbar und/oder regelbar ist, welche in Wirkbeziehung mit dem oder den Objekten steht. Beispielsweise kann es sich bei einer solchen Vorrichtung um einen Scheinwerfer oder Lautsprecher handeln, welcher auf einen Schauspieler als Objekt gerichtet ist. Die Positionsdaten lassen sich dann direkt dazu verwenden, die Bewegung des Scheinwerfers oder Lautsprechers zu steuern.

Es kann vorgesehen sein, daß die Lichtquelleneinrichtung eine oder mehrere Lichtquellen umfaßt, mittels welcher oder welchen Objekte bestrahlbar sind. Bei einer Lichtquelle handelt es sich insbesondere um einen Laser. Ein Objekt ist dann mit einem Reflektor versehen, so daß die Lichtsignale des Objekts durch Reflexion entstehen.

In diesem Zusammenhang ist es günstig, wenn eine Nachführungseinrichtung zur Beaufschlagung des oder der Objekte mit Licht der Lichtquelleneinrichtung vorgehen ist, wobei die Nachführungseinrichtung mittels bestimmten Positionsdaten des oder der Objekte steuerbar und/oder regelbar ist. Dadurch wird sichergestellt, daß das Objekt mit Licht beaufschlagt wird, wodurch wiederum sichergestellt ist, daß das Objekt Lichtsignale aussenden kann. Die Lichtquelleneinrichtung kann in die Nachführungseinrichtung integriert sein oder es kann eine getrennte Lichtquelleneinrichtung vorgesehen sein.

Es kann auch vorgesehen sein, daß die Lichtquelleneinrichtung an einem Objekt angeordnet ist. Beispielsweise sind an einem Objekt Leuchtdioden als Lichtquellen angeordnet.

Es kann vorgesehen sein, daß über die Detektionseinrichtung Licht spektral aufgelöst detektierbar ist. Wenn unterschiedlichen Objekten eine unterschiedliche spektrale Codierung zugeordnet ist, dann läßt sich über diese spektrale Codierung über die Detektionseinrichtung zwischen unterschiedlichen Objekten unterscheiden.

Es ist vorteilhaft, wenn ein Objekt mit ein Trägheitssensorsystem versehen ist. Dadurch kann beispielsweise während Zeiten, in denen der Lichtweg unterbrochen ist, trotzdem eine Positionsbestimmung für das Objekt durchgeführt werden.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Objekts, dessen Position zu verfolgen ist und welches extern beleuchtet wird;
- Figur 2: eine schematische Darstellung eines Objekts, dessen Position zu verfolgen ist und welches selbstleuchtend ist;
- Figur 3: eine schematische Darstellung eines Ausführungsbeispiels eines erfindungsgemäßen Positionsverfolgungssystems;
- Figur 4: eine schematische Darstellung von Bauelementen des Positionsverfolgungssystems gemäß Figur 3 und
- Figur 5: eine schematische Darstellung von Meßdaten für die Verfolgung eines Objekts, welches sich auf einer zweidimensionalen Bahn bewegt, wobei die kleineren Punkte die ermittelte Positionsdaten anzeigen, welche über einen Laserstrahl auf der Bahn projiziert wurden.

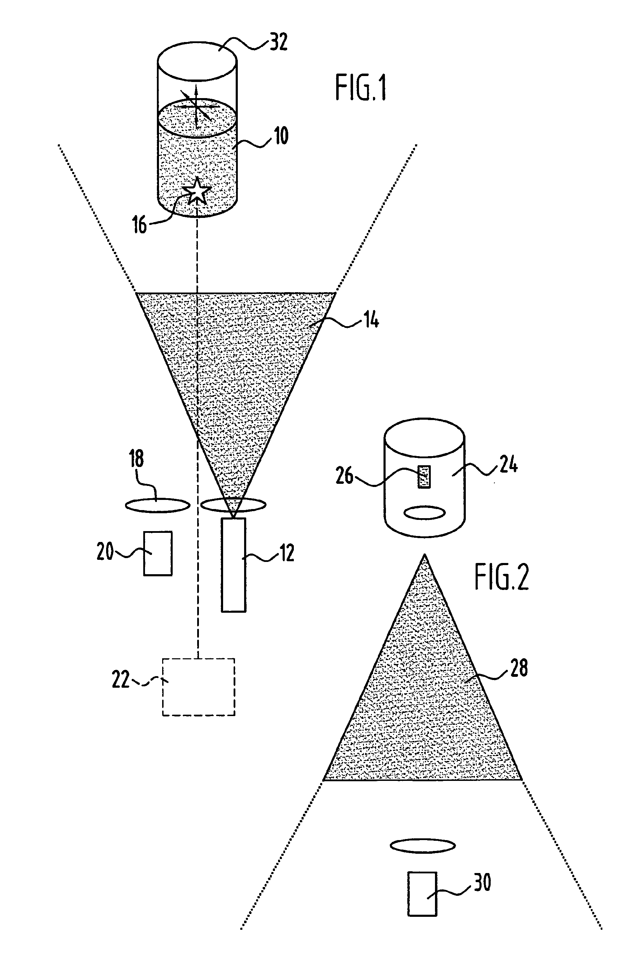

Erfindungsgemäß wird ein opto-mechanisches Positionsverfolgungsverfahren bzw. ein opto-mechanisches Positionsverfolgungssystem bereitgestellt. Die Objekte, die sich insbesondere auf einer zweidimensionalen Bahn bewegen bzw. auf einer zweidimensionalen Fläche bewegen, senden hierzu Lichtsignale aus, die detektiert werden. Es kann dabei vorgesehen sein, wie in Figur 1 schematisch gezeigt, daß ein Objekt 10 mit Licht einer externen Lichtquelle 12 bei der es sich insbesondere um einen Laser handelt, beaufschlagt wird. Das Licht kann beispielsweise in der Form eines Lichtkegels 14 in Richtung auf das Objekt 10 zu ausgesandt werden. Das Objekt 10 ist mit einem oder mehreren Reflektoren 16 versehen, welche das Licht reflektieren. Das reflektierte Licht wird gesammelt (in Figur 1 schematisch durch eine Linse 18 angedeutet) und auf einen Detektor 20 gerichtet. Der Detektor 20 weist eine zweidimensionale Ortsauflösung auf, um die Position des Objektes 10 ermitteln zu können.

Es kann grundsätzlich auch eine Entfernungsmessungseinrichtung 22 vorgesehen sein, über welche das Objekt 10 mit Signalen beaufschlagt wird, wobei die Laufzeit von Signalen, welche von der Entfernungsmessungseinrichtung 22 emittiert werden, an dem Objekt 10 reflektiert werden und dann wieder von der Entfernungsmessungseinrichtung 22 empfangen werden, ermittelt wird, um so den Abstand zwischen der Entfernungsmessungseinrichtung 22 und dem Objekt 10 bestimmen zu können. In Kombination mit dem Detektor 20 läßt sich dadurch die Position des Objekts 10 im Raum ermitteln.

Bei diesem Beispiel, bei dem das Objekt 10 beleuchtet wird, ist die Lichtquelle 12 außerhalb des Objekts 10 angeordnet und das Objekt 10 leuchtet passiv, da die vom Objekt 10 gesandten Lichtsignale Reflexionssignale an dem Reflektor 16 sind.

Es ist auch grundsätzlich möglich, wie in Figur 2 schematisch gezeigt, daß ein Objekt 24 selbstleuchtend ist, indem es mit einer Lichtquelle 26 versehen ist. Diese Lichtquelle sendet Licht aus, beispielsweise in der Form eines Lichtkegels 28, wobei dieses Licht von einem Detektor 30 detektiert wird. Der Detektor 30 weist eine zweidimensionale Ortsauflösung auf.

Grundsätzlich ist es auch möglich, daß ein Objekt 10 bzw. 24 mit einem Trägheitssensorsystem 32 (vgl. Figur 1) versehen ist, über welches sich die Lage des entsprechenden Objekts 10 bzw. 24 im Raum bestimmen läßt. Beispielsweise ist es möglich, die Position des Objekts 10 über das Trägheitssensorsystem 32 zu bestimmen, wenn der Lichtweg zwischen dem Reflektor 16 und dem Detektor 20 unterbrochen ist.

Das Trägheitssensorsystem 32 sendet insbesondere drahtlos Positionssignale an eine zugeordnete Detektionseinrichtung (in der Figur 1 nicht gezeigt).

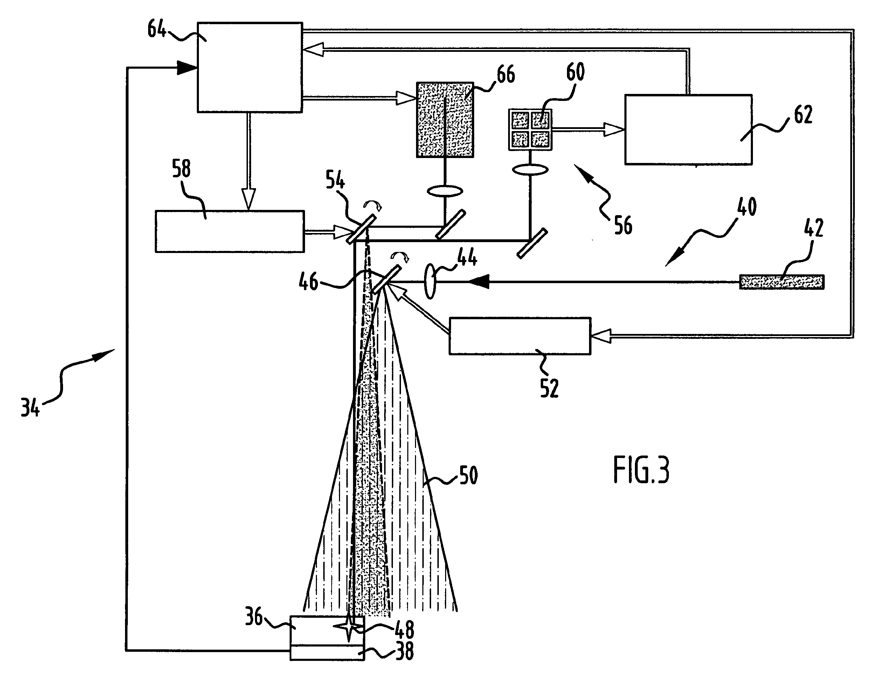

Bei einem Ausführungsbeispiel eines erfindungsgemäßen Positionsverfolgungssystems, welches in Figur 3 als Ganzes mit 34 bezeichnet ist, wird ein Objekt 36, das mit einem Trägheitssensorsystem 38 versehen sein kann, extern beleuchtet. Es ist aber auch grundsätzlich möglich, daß das Objekt 36 selbstleuchtend ist.

Zur Beleuchtung des Objekts 36 ist eine als Ganzes mit 40 bezeichnete Lichtquelleneinrichtung vorgesehen, welche einen Laser 42 als primäre Lichtquelle umfaßt. Der Laser sendet vorzugsweise Licht im für das menschliche Auge nicht sichtbaren Spektralbereich aus, wie beispielsweise im Wellenlängenbereich zwischen 1500 nm und 1800 nm. Dieser Spektralbereich ist auch dadurch vorteilhaft, daß zum Erreichen der Laserklasse 1 gemäß VDE 837 / DIN EN 60825-1 eine verhältnismäßig hohe Laserleistung erlaubt ist, was die Detektionsgenauigkeit und damit die Genauigkeit der Positionsbestimmung erhöht.

Das Licht der Lichtquelleneinrichtung 40 ist moduliert. Eine typische Modulationsfrequenz liegt in der Größenordnung von 20 kHz. Es ist dabei grundsätzlich möglich, daß der Laser 42 selber moduliertes Licht aussendet oder daß dem Laser ein Modulator nachgeschaltet ist (in der Figur 3 nicht gezeigt).

Das Licht der Lichtquelleneinrichtung 40 wird gebündelt (in Figur 3 durch eine Linse 44 angedeutet) und über ein oder mehrere Richtelemente 46 auf das Objekt 36 gerichtet. Das Licht wird dann an dem Objekt 36 durch einen Reflektor 48 reflektiert. Licht 50 (in Figur 3 durch einen Lichtkegel angedeutet) ist dem Objekt 36, welches sich bewegt, nachführbar. Dazu ist das Richtelement 46 bzw. sind die Richtelemente 46 entsprechend beweglich angeordnet, um auch bei bewegtem Objekt 36 eine Lichtbeaufschlagung des Reflektors 48 sicherzustellen. Beispielsweise sind das oder die Richtelemente 46 in einen Zweiachsenscanner 52 integriert. Wenn sich das Objekt 36 auf einer zweidimensionalen Fläche bewegt, dann kann innerhalb des Nachführungsbereiches des Zweiachsenscanners 52 das Objekt 36 beleuchtet werden. Die Achsen des Zweiachsenscanners 52 sind dabei so orientiert, daß eben eine Ausleuchtung des Objekts 36 auf dessen Bewegungsebene möglich ist.

In einem konkreten Ausführungsbeispiel wurde als Zweiachsenscanner ein Galvanometerscanner M2ST GSI Lumonics verwendet, welcher einen maximalen Scannwinkel zwischen +/- 30 ° aufweist. Die Spiegelabmessung eines Richtelements 46 dieses Galvanometerscanners beträgt 9.5 mm.

Das von dem Objekt 36 reflektierte Licht, welches die Lichtsignale des Objekts 36 darstellt, wird über ein mehrere Richtelemente 54 auf eine als Ganzes mit 56 bezeichnete Detektoreinrichtung gerichtet. Die Detektoreinrichtung 56 ist in einem Ruhesystem angeordnet. Das oder die Richtelemente 54 sind insbesondere beweglich ausgebildet, um bei einem bewegten Objekt eine Nachführung zu ermöglichen. Insbesondere sind das oder die Richtelemente 54 Teil eines Zweiachsenscanners 58, wobei dieser Zweiachsenscanner 58 grundsätzlich gleich aufgebaut sein kann wie der Zweiachsenscanner 52.

Insbesondere sind die beiden Zweiachsenscanner 52, 58, welche jeweils eine Nachführungseinrichtung für Licht bilden, so angeordnet, daß die optischen Achsen für die Lichtbeaufschlagung des Objekts 36 und für den Empfang der vom Objekt 36 gesandten Lichtsignale kollinear sind.

Dies läßt sich dadurch erreichen, daß die beiden Zweiachsenscanner 52, 58 synchron gesteuert und/oder geregelt werden, so daß - abgesehen von einer Positionsänderung des Meßobjekts innerhalb eines Meßintervalls - die optische Achse des Lichtkegels 50 parallel zur Reflexionsrichtung des an dem Objekt 36 reflektierten Lichts ist.

Weiterhin ist die optische Achse für die Lichtbeaufschlagung des Richtelements 46 im wesentlichen parallel zu der optischen Achse der Richtung des Lichts des Richtelements 54 zu der Detektoreinrichtung 56.

Die Detektoreinrichtung 56 umfaßt einen Positionsdetektor 60, mit dem zweidimensional ortsaufgelöst gemessen werden kann. Bei einem solchen positionsempfindlichen Detektor 60 kann es sich beispielsweise um einen Quadrantendetektor handeln oder um Lateraleffekt-Fotodioden. Beispiele für solche Positionsdetektoren sind der Centrovision QD50 mit einer aktiven Fläche von 50 mm² und der SiTek PSD 2L 10 SP mit einer aktiven Fläche von 10×10 mm².

Der Positionsdetektor 60, auf den das Reflexionslicht des Objekts 36 gerichtet wird, ermittelt die Position des entsprechenden Lichtflecks zweidimensional ortsaufgelöst, wobei aus dieser Position auf die Winkelposition des Objekts 36 bezüglich einer definierten Ausgangsposition geschlossen werden kann.

Der Positionsdetektor 60 gibt seine Detektionssignale an einen Lock-In-Verstärker 62 weiter. Dort wird das aufgrund der Modulation periodische Lichtsignal des Objekts 36 mit einem entsprechenden periodischen Signal korreliert. Es läßt sich dadurch eine Hintergrundbeleuchtung der Detektionseinrichtung 56 ausschließen und dadurch eine genaueres Positionsresultat erhalten.

Es ist möglich, daß dem System ein Funkträgersignal bereitgestellt wird mit einer Referenzfrequenz. Aufgrund dieser Referenzfrequenz wird das Licht, welches vom Objekt 32 ausgesandt wird, moduliert. Ein entsprechender Empfänger des Objekts 32 oder der Lichtquelleneinrichtung 40 empfängt das Funkträgersignal und gibt ein Signal weiter an einen Modulator. Das Funkträgersignal ist auch von dem Lock-In-Verstärker 62 oder einem mit diesem verbundenen Empfänger empfangbar, um die Referenzfrequenz bereitgestellt zu bekommen.

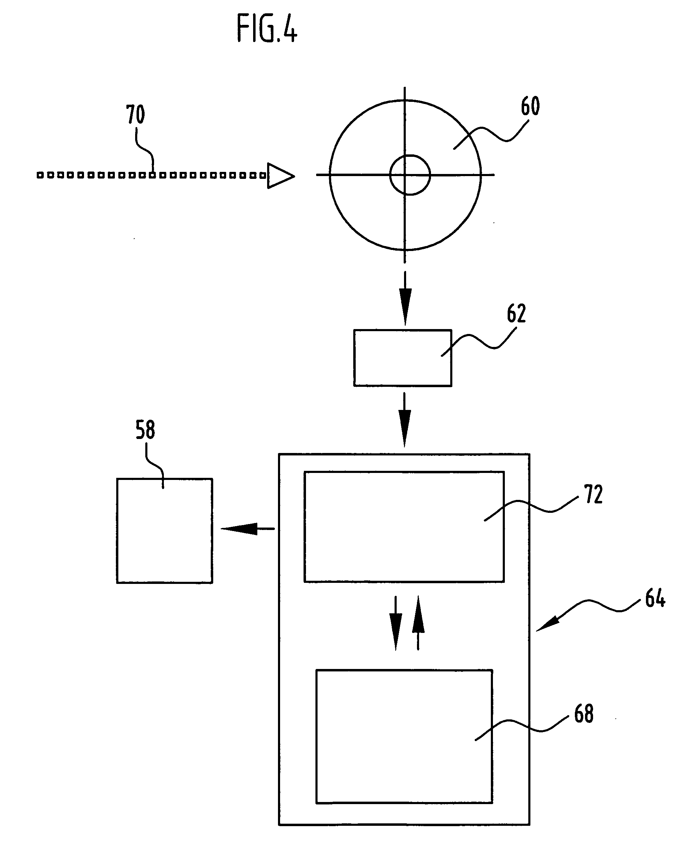

Die Signale des Lock-In-Verstärkers 62 werden an eine Positionsbestimmungseinrichtung 64 weitergegeben, welche die Winkelposition des Objekts 36 bezogen auf eine definierte Ausgangsposition berechnet. Die Positionsbestimmungseinrichtung 64 umfaßt eine Steuerungs- und/oder Regelungseinrichtung 68 (Figur 4), welche mit dem Zweiachsenscanner 52 und dem Zweiachsenscanner 58 jeweils verbunden ist. Über die bestimmte Position des Objekts 36 wird für eine Nachführung der Richtelemente 46 und 54 und insbesondere synchrone Nachführung der Richtelemente 46 und 54 gesorgt. Die Steuerungs- und/oder Regelungseinrichtung 68 der Positionsbestimmungseinrichtung 64 steuert bzw. regelt die Bewegung der Richtelemente 46 und 54 derart, daß zum einen der Lichtkegel 50 dem Objekt 36 nachgeführt oder/und zum anderen dafür gesorgt wird, daß das vom Objekt 36 reflektierte Licht der Detektoreinrichtung 56 zugeführt wird. Die Nachführungseinrichtung, welche mit Hilfe des Zweiachsenscanners 58 gebildet ist, sorgt also dafür, daß Lichtsignale des Objekts 36 die Detektoreinrichtung 56 erreichen. Die Nachführungseinrichtung, welche mit Hilfe des Zweiachsenscanners 52 gebildet ist, sorgt dafür, daß Lichtsignale von dem Objekt 36 gesandt werden.

Die Positionsbestimmungseinrichtung 64 kann auch mit einer Vorrichtung 66 verbunden sein, welche mit dem Objekt 36 in einer Wirkverbindung steht. Die Vorrichtung 66 beaufschlagt das Objekt 36 beispielsweise mit Signalen, wobei die Positionsdaten des Objekts 36 für die Beaufschlagung bekannt sein müssen. Beispielsweise handelt es sich bei der Vorrichtung 66 um eine Lichtquelle im sichtbaren Bereich wie einen Scheinwerfer, welcher dem Objekt nachgeführt wird. Diese Nachführung läßt sich über die Positionsbestimmungseinrichtung 64 steuern.

Bei dem in Figur 3 gezeigten Ausführungsbeispiel sendet die Vorrichtung 66 Licht aus, welches an dem oder den Richtelementen 54 reflektiert wird und auf das Objekt 36 gesandt wird, um dieses beispielsweise optisch zu beleuchten. Bei dieser Ausführungsform erfolgt die Steuerung der Signalbeaufschlagung des Objekts 36 gemeinsam mit der Nachführung für Lichtsignale, welche von dem Objekt 36 stammen, bezüglich der Detektionseinrichtung 56. Es kann aber auch grundsätzlich vorgesehen sein, daß die Vorrichtung 66 bezüglich des Lichtwegs unabhängig von dem Lichtweg für Lichtsignale von dem Objekt 36 ist.

Beispielsweise kann es sich bei der Vorrichtung 66 auch um eine Sicherheitsvorrichtung handeln, welche die Energieversorgung des beweglichen Objekts 36 unterbricht, wenn das Objekt bestimmte Winkelpositionen erreicht oder überschreitet.

Es ist auch möglich, wenn das Objekt 36 mit einem Trägheitssensorsystem 38 versehen ist, daß die Positionsbestimmungseinrichtung 64 Signale dieses Trägheitssensorsystems 38 erhält. Es kann dann zusätzlich oder alternativ eine inertiale Objektverfolgung durchgeführt werden. Wenn beispielsweise der Lichtstrahl 50 zu dem Objekt 36 und/oder das Reflexionslicht von dem Objekt 36 zu der Detektoreinrichtung 56 unterbrochen ist, dann kann über das Trägheitssensorsystem 38 ein entsprechendes Positionssignal bereitgestellt werden, so daß die Position des Objekts 36 für das Positionssystem 34 nicht verloren geht.

Es ist dadurch auch möglich, die Positionssignale, welche von dem Trägheitssensorsystem 38 geliefert werden, in Bezug zu den optisch ermittelten Positionsdaten zu setzen. Dadurch lassen sich die von dem Trägheitssensorsystem 38 bereitgestellten Positionsdaten differenzieren, so daß sich wiederum die Genauigkeit erhöhen läßt.

### Das erfindungsgemäße Positionsverfolgungsverfahren funktioniert wie folgt:

Das Objekt 36 bewegt sich beispielsweise auf einer zweidimensionalen Fläche. Beispielsweise handelt es sich um einen Schauspieler, welcher sich auf einer Bühne bewegt. Das Objekt 36 sendet Lichtsignale aus, bei denen es sich um Reflexionssignale handeln kann oder um Lichtsignale einer Lichtquelle, welche an dem Objekt 36 angeordnet ist. Diese Lichtsignale werden auf die Detektionseinrichtung 56 gerichtet, wobei der Detektor 60 die Position der Lichtsignale 60 zweidimensional aufgelöst registriert. Unter Berücksichtigung der Stellung des Richtelements 54 läßt sich dadurch eine Winkelposition des Objekts 36 bestimmen.

Die Winkelposition wird bezüglich einer definierten Ausgangsposition als Referenzposition in Relation gestellt. Diese Größe (aktuelle Winkelposition bezogen auf die Referenzposition) bildet eine Stellgröße für die Steuerungs- und/oder Regelungseinrichtung 68 der Positionsbestimmungseinrichtung 64. Entsprechend dieser Stellgröße wird der Zweiachsenscanner 58 eingestellt und, sofern das Objekt 36 beleuchtet wird, der Zweiachsenscanner 52 eingestellt, das heißt die Lichtbeaufschlagung des Objekts 36 und die Sammlung der Lichtsignale des Objekts 36 werden dem Objekt 36 nachgeführt.

Wie in Figur 4 schematisch gezeigt, wird das auf den Positionsdetektor 60 gerichtete Licht 70 (beispielsweise Reflexionslicht oder direkt von der Quelle 36 ausgesandtes Licht) ortsaufgelöst in einer Ebene des Detektors 60 detektiert. Der Positionsdetekor 60 weist beispielsweise einen Frequenzbereich von 250 kHz und eine Verstärkung von 10⁴ auf.

Die Signale des Positionsdetektors 60 werden dem Lock-In-Verstärker 62 bereitgestellt, welcher in einer Ausführungsform eine Integrationszeit von 300 µs und eine Verstärkung von 3 x 10⁴ aufweist.

Die Signale des Lock-In-Verstärkers 62 werden der Positionsbestimmungseinrichtung 64 bereitgestellt. Ein AD/DA-Konverter 72 wandelt die analogen Eingangssignale in digitale Signale um. Die Steuerungs- und/oder Regelungseinrichtung 68 bestimmt die Winkelposition des Objekts 36, wobei beispielsweise eine Programmschleife der Dauer 3 µs durchlaufen wird. Daraus wird dann Richtung und Größe eines Stellschritts für den Zweiachsenscanner 58 und eventuell zusätzlich den Zweiachsenscanner 52 bestimmt. Dieser Stellschritt ist in Abhängigkeit von der Richtung der Bewegung des Objekts 36 und dessen Winkelgeschwindigkeit. Dieser Stellschritt wiederum wird über den AD/DA-Konverter in ein analoges Signal gewandelt, welches dann dem Zweiachsenscanner 58 bereitgestellt wird, um für die entsprechende Nachführung zu sorgen. Zusätzlich wird es dem Zweiachsenscanner 52 bereitgestellt, sofern das Objekt 36 beleuchtet wird.

Bei dem erfindungsgemäßen Verfahren ist das Objekt 36 kontinuierlich und automatisch beleuchtet. Auch die Detektoreinrichtung 56 ist kontinuierlich und automatisch beleuchtet, wenn das Objekt in dem Lichtfeld des Zweiachsenscanners 58 liegt.

Durch die Modulation des Lichtsignals des Objekts 36 mit einer festen Modulationsfrequenz lassen sich Lock-In-Techniken zur Positionsbestimmung des Objekts 36 verwenden. Da dadurch insbesondere Hintergrundlicht in seiner Auswirkung auf die Detektionseinrichtung 56 eliminierbar ist, ergibt sich eine hohe Genauigkeit.

Es läßt sich die Position von schnellbewegten Objekten mit einer Winkelgeschwindigkeit von größer 10 rad/s verfolgen, wobei sich eine hohe zeitliche Dynamik bzw. eine große Nachführgenauigkeit von wenigen mrad erreichen läßt.

Die Kollinearisierung der optischen Achsen ermöglicht eine kontinuierliche automatische Beleuchtung des Objekts 36.

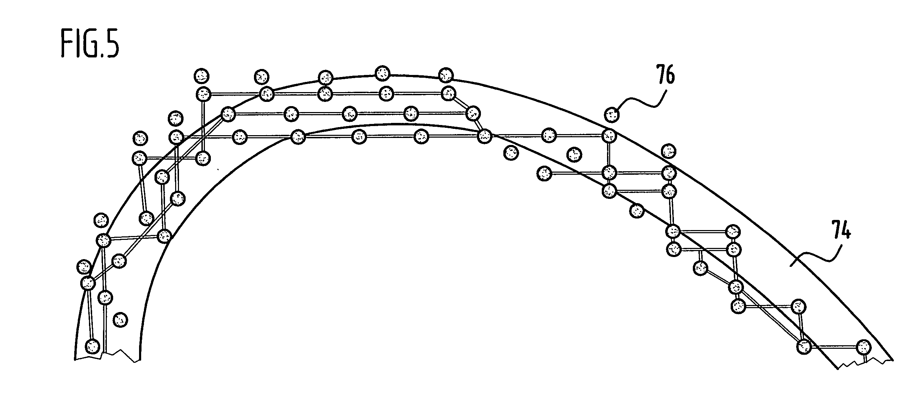

In Figur 5 ist das Ergebnis einer tatsächlichen Messung gezeigt, wobei das Objekt durch einen auf einem Schirm bewegten Lichtpunkt eines Lasers simuliert ist. In Figur 5 ist die Bahn 74 dieses Lichtpunkts gezeigt. Die Positionsdaten wurden an einen Laser weitergegeben, dessen Laserstrahl auf den Schirm (entsprechend der Zeichenebene in Figur 5) projiziert wurde. Die Punkte 76 in Figur 5 sind die Lichtflecke dieses Lasers. Sie stellen eine Visualisierung der ermittelten Positionsdaten dar. Man erkennt, daß die Positionsdaten die Bahn des Objekts 36 mit guter Genauigkeit wiedergeben.

Wie oben erwähnt ist es möglich, daß zusätzlich über Beschleunigungssensoren des Trägheitssensorsystems 38 die Position des Objekts 36 ermittelt wird. Wenn beispielsweise der Lichtweg unterbrochen ist, dann kann über diese Meßdaten auch in "Dunkelzeiten" die Position des Objekts 36 bestimmt werden, so daß bei einer Bewegung in einer Dunkelzeit das Objekt 36 für das Positionsverfolgungssystem 34 nicht verloren geht. Durch einen Vergleich von optischen Positionsdaten und Positionsdaten des Trägheitssensorsystems 38 lassen sich die letzteren Daten auch referenzieren, so daß die Genauigkeit der Positionsbestimmung mit Daten des Trägheitssensorsystems 38 erhöhbar ist.

Das erfindungsgemäße Verfahren läßt sich vorteilhaft einsetzen für die Positionsverfolgung von mehreren Objekten.

Dazu ist es vorgesehen, daß unterschiedliche Objekte unterschiedlich codiert sind. Dies kann beispielsweise dadurch erfolgen, daß unterschiedliche Objekte 36 eine unterschiedliche spektrale Codierung aufweisen. Beispielsweise werden die unterschiedlichen Objekte spektral breitbandig bestrahlt, wobei unterschiedliche Objekte unterschiedliche Reflektoren 58 aufweisen, die eine spektral selektive Reflexion bewirken. Dies kann durch eine unterschiedliche Beschichtung der Reflektoren erreicht sein. Bei den Reflektoren kann es sich beispielsweise um Katzenaugen oder Reflective Sheets handeln.

Bei einem selbstleuchtenden Objekt läßt sich die Codierung über die Modulationsfrequenz des von dem selbstleuchtenden Objekte ausgesandten Lichts erreichen. Eine Codierung kann auch über die spektralen Charakteristika des ausgesandten Lichts erreicht werden.

Die Detektionseinrichtung 56 detektiert Lichtsignale, welche sich in Abhängigkeit von den Objekten in ihren Charakteristika unterscheiden, beispielsweise in Modulationsfrequenz und/oder spektralen Charakteristika. Die Positionsdaten können dann den einzelnen Objekten zugeordnet werden und dadurch läßt sich wiederum die Position einer Mehrzahl von Objekten gleichzeitig verfolgen.

Die Detektoreinrichtung 56 ist in einem Ruhesystem bezogen auf die Bewegung des Objekts 36 angeordnet. In diesem Ruhesystem sind auch die Zweiachsenscanner 52 und 58 sowie die Positionsbestimmungseinrichtung 64 angeordnet.

Es ist grundsätzlich möglich, daß Objekte 36 integral beleuchtet werden, das heißt insbesondere mit einem Lichtkegel 50 beaufschlagt werden. Es ist aber auch möglich, daß Objekte 36 durch eine Art Lichtfinger abgetastet werden. Beispielsweise ist ein vertikales Lichtband vorgesehen. Wenn das Objekt 36 integral beleuchtet wird, dann muß, damit ein moduliertes Lichtsignal entsteht, das Ausgangssignal moduliert und insbesondere frequenzstabilisiert moduliert sein. Wenn das Objekt abgetastet wird, dann entsteht durch die Abtastung ein periodisches Signal. In diesem Falle kann auch eine kontinuierliche Lichtquelle zur Beleuchtung des Objekts 36 eingesetzt werden oder die Lichtquelle kann Licht in spektraler Trennung in der Art von Spektralbanden aussenden, d.h. Licht in diskreten Wellenlängen bzw. Wellenlängenbereichen.

## Patentansprüche

1. Verfahren zur Positionsverfolgung von beweglichen Objekten, bei dem ein zu verfolgendes Objekt Lichtsignale sendet und von dem Objekt kommende Lichtsignale ortsaufgelöst detektiert werden.

2. Verfahren nach Anspruch 1, **dadurch gekennzeichnet, daß** das Objekt selbstleuchtend ist.

3. Verfahren nach Anspruch 1 oder 2, **dadurch gekennzeichnet, daß** das Objekt mit einer oder mehreren Lichtquellen versehen wird.

4. Verfahren nach einem der vorangehenden Ansprüche, **dadurch gekennzeichnet, daß** das Objekt passiv leuchtet.

5. Verfahren nach einem der vorangehenden Ansprüche, **dadurch gekennzeichnet, daß** das Objekt beleuchtet wird.

6. Verfahren nach Anspruch 5, **dadurch gekennzeichnet, daß** das Objekt Licht einer Lichtquelle, durch welche das Objekt beleuchtet wird, reflektiert.

7. Verfahren nach Anspruch 5 oder 6, **dadurch gekennzeichnet, daß** das Objekt integral beleuchtet wird.

8. Verfahren nach einem der Ansprüche 5 bis 7, **dadurch gekennzeichnet, daß** das Objekt mit moduliertem Licht beleuchtet wird.

9. Verfahren nach einem der Ansprüche 5 bis 8, **dadurch gekennzeichnet, daß** das Objekt bei der Beleuchtung periodisch abgetastet wird.

10. Verfahren nach einem der vorangehenden Ansprüche, **dadurch gekennzeichnet, daß** die vom Objekt gesandten Lichtsignale moduliert sind.

11. Verfahren nach einem der vorangehenden Ansprüche, **dadurch gekennzeichnet, daß** Detektionssignale über Lock-In-Verfahren ausgewertet werden.

12. Verfahren nach einem der vorangehenden Ansprüche, **dadurch gekennzeichnet, daß** die Detektion der Lichtsignale von dem Objekt zweidimensional ortsaufgelöst erfolgt.

13. Verfahren nach einem der vorangehenden Ansprüche, **dadurch gekennzeichnet, daß** die Winkelposition des Objekts bezüglich eines Ruhesystems ermittelt wird.

14. Verfahren nach Anspruch 13, **dadurch gekennzeichnet, daß** die Winkelposition gegenüber einer Referenzposition ermittelt wird.

15. Verfahren nach Anspruch 14, **dadurch gekennzeichnet, daß** die Winkelposition gegenüber der Referenzposition eine Stellgröße für eine Nachführungseinrichtung ist.

16. Verfahren nach einem der vorangehenden Ansprüche, **dadurch gekennzeichnet, daß** das Objekt sich auf einer zweidimensionalen Fläche bewegt.

17. Verfahren nach einem der vorangehenden Ansprüche, **dadurch gekennzeichnet, daß** die Position eines Objekts auf einer zweidimensionalen Fläche verfolgt wird.

18. Verfahren nach einem der vorangehenden Ansprüche, **dadurch gekennzeichnet, daß** die Lichtbeaufschlagung eines Detektors entsprechend der bestimmten Position des Objekts nachgeführt wird.

19. Verfahren nach einem der vorangehenden Ansprüche, **dadurch gekennzeichnet, daß** ein oder mehrere Richtelemente, mittels welchem oder welchen Licht vom Objekt auf einen Detektor gerichtet wird, entsprechend der Position des Objekts nachgeführt wird.

20. Verfahren nach Anspruch 19, **dadurch gekennzeichnet, daß** die Nachführung über einen Zweiachsenscanner erfolgt.

21. Verfahren nach einem der vorangehenden Ansprüche, **dadurch gekennzeichnet, daß** eine optische Achse für Lichtsignale vom Objekt und für Licht, mit welchem das Objekt beleuchtet wird, im wesentlichen kollinear eingestellt werden.

22. Verfahren nach einem der vorangehenden Ansprüche, **dadurch gekennzeichnet, daß** die Beleuchtung des Objekts entsprechend der bestimmten Position des Objekts nachgeführt wird.

23. Verfahren nach Anspruch 22, **dadurch gekennzeichnet, daß** eine Nachführung der Beleuchtung und eine Nachführung eines oder mehrerer Richtelemente für den Detektor korreliert werden.

24. Verfahren nach Anspruch 22 oder 23, **dadurch gekennzeichnet, daß** die Nachführung der Beleuchtung über einen Zweiachsenscanner erfolgt.

25. Verfahren nach einem der vorangehenden Ansprüche, **dadurch gekennzeichnet, daß** eine Entfernungsmessung zwischen einem Ruhesystem und dem Objekt durchgeführt wird.

26. Verfahren nach Anspruch 25, **dadurch gekennzeichnet, daß** die Entfernung über eine Laufzeitmessung bestimmt wird.

27. Verfahren nach einem der vorangehenden Ansprüche, **dadurch gekennzeichnet, daß** die Lichtsignale in einem für das menschliche Auge unsichtbaren Spektralbereich liegen.

28. Verfahren nach Anspruch 27, **dadurch gekennzeichnet, daß** die Lichtsignale in dem Wellenlängenbereich zwischen 1500 nm und 1800 nm liegen.

29. Verfahren nach einem der vorangehenden Ansprüche, **dadurch gekennzeichnet, daß** das Objekt mit Laserlicht beleuchtet ist oder beleuchtet wird.

30. Verfahren nach einem der vorangehenden Ansprüche, **dadurch gekennzeichnet, daß** das Objekt mit einem Trägheitssensorsystem versehen wird.

31. Verfahren nach Anspruch 30, **dadurch gekennzeichnet, daß** zur Positionsbestimmung Detektorsignale der optischen Detektion und Signale des Trägheitssensorsystems verknüpft werden.

32. Verfahren nach Anspruch 30 oder 31, **dadurch gekennzeichnet, daß** optisch ermittelte Positionsdaten als Referenzdaten für das Trägheitssensorsystem dienen.

33. Verfahren nach einem der vorangehenden Ansprüche, **dadurch gekennzeichnet, daß** über die ermittelten Positionsdaten eine Vorrichtung gesteuert und/oder geregelt wird, welche mit dem Objekt in einer Wirkverbindung steht.

34. Verfahren nach einem der vorangehenden Ansprüche, **dadurch gekennzeichnet, daß** gleichzeitig die Position einer Mehrzahl von Objekten verfolgt wird.

35. Verfahren nach Anspruch 34, **dadurch gekennzeichnet, daß** unterschiedliche Objekte unterschiedlich codiert werden.

36. Verfahren nach Anspruch 34 oder 35, **dadurch gekennzeichnet, daß** unterschiedliche Objekte unterschiedliche spektrale Charakteristika haben.

37. Verfahren nach einem der Ansprüche 34 bis 36, **dadurch gekennzeichnet, daß** unterschiedlichen Objekten unterschiedliche Modulationsfrequenzen zugeordnet sind.

38. Positionsverfolgungssystem für bewegliche Objekte (32), umfassend eine Detektionseinrichtung (56), welche in einem Ruhesystem angeordnet ist, eine Lichtquelleneinrichtung (40), welche derart mit einem oder mehreren zur verfolgenden Objekten (32) verbunden ist, daß das oder die Objekte (32) Lichtsignale senden, wobei die Lichtsignale durch die Detektionseinrichtung (56) ortsaufgelöst detektierbar sind, und eine Positionsbestimmungseinrichtung (64), über welche die Position des oder der Objekte mit Hilfe der Detektionssignale bestimmbar ist.

39. Positionsverfolgungssystem nach Anspruch 38, **dadurch gekennzeichnet, daß** die Lichtsignale des oder der Objekte (32) moduliert sind.

40. Positionsverfolgungssystem nach Anspruch 38 oder 39, **dadurch gekennzeichnet, daß** ein Lock-In-Verstärker (62) für Signale der Detektionseinrichtung (56) vorgesehen ist.

41. Positionsverfolgungssystem nach einem der Ansprüche 38 bis 40, **dadurch gekennzeichnet, daß** eine Nachführungseinrichtung für die Richtung von Lichtsignalen, welche von dem oder den Objekten (32) gesandt werden, zu der Detektionseinrichtung (56) vorgesehen ist, wobei die Nachführungseinrichtung über die bestimmte Position des oder der Objekte (32) steuerbar und/oder regelbar ist.

42. Positionsverfolgungssystem nach Anspruch 41, **dadurch gekennzeichnet, daß** die Nachführungseinrichtung einen Zweiachsenscanner (58) umfaßt.

43. Positionsverfolgungssystem nach Anspruch 41 oder 42, **dadurch gekennzeichnet, daß** über die Positionsbestimmungseinrichtung (64) die Nachführungseinrichtung steuerbar und/oder regelbar ist.

44. Positionsverfolgungssystem nach einem der Ansprüche 38 bis 43, **dadurch gekennzeichnet, daß** über die Positionsbestimmungseinrichtung (64) eine Vorrichtung (66) steuerbar und/oder regelbar ist, welche in Wirkbeziehung mit dem oder den Objekten (32) steht.

45. Positionsverfolgungssystem nach einem der Ansprüche 38 bis 44, **dadurch gekennzeichnet, daß** die Lichtquelleneinrichtung (40) eine oder mehrere Lichtquellen umfaßt, mittels welcher oder welchen Objekte (32) bestrahlbar sind.

46. Positionsverfolgungssystem nach Anspruch 45, **dadurch gekennzeichnet, daß** ein Objekt (32) mit mindestens einem Reflektor (48) versehen ist.

47. Positionsverfolgungssystem nach Anspruch 45 oder 46, **dadurch gekennzeichnet, daß** eine Nachführungseinrichtung zur Beaufschlagung des oder der Objekte (32) mit Licht der Lichtquelleneinrichtung (40) vorgesehen ist, wobei die Nachführungseinrichtung über bestimmte Positionen des oder der Objekte (32) steuerbar und/oder regelbar ist.

48. Positionsverfolgungssystem nach Anspruch 47, **dadurch gekennzeichnet, daß** die Nachführungseinrichtung einen Zweiachsenscanner (52) umfaßt.

49. Positionsverfolgungssystem nach einem der Ansprüche 38 bis 48, **dadurch gekennzeichnet, daß** die Lichtquelleneinrichtung (40) an einem Objekt angeordnet ist.

50. Positionsverfolgungssystem nach einem der Ansprüche 38 bis 49, **dadurch gekennzeichnet, daß** über die Detektionseinrichtung (56) Licht spektral aufgelöst detektierbar ist.

51. Positionsverfolgungssystem nach einem der Ansprüche 38 bis 50, **dadurch gekennzeichnet, daß** ein Objekt (32) mit einem Trägheitssensorsystem (38) versehen ist.
